# FASCICULE DE BREVET EUROPEEN

(11) **EP 3 393 939 B1**
(45) Date de publication et mention de la délivrance du brevet: **20.08.2025**
(21) Numéro de dépôt: 16808987.8
(22) Date de dépôt: 06.12.2016
(51) Int. Cl.: B65G 1/04, B65G 1/06

(54) **SYSTÈME DE STOCKAGE TAMPON ET DE SÉQUENCEMENT DE CHARGES EN AMONT D'AU MOINS UN POSTE DE PRÉPARATION**
SYSTEM ZUR PUFFERSPEICHERUNG UND SEQUENZIERUNG VON MINDESTENS EINER ZUBEREITUNGSSTATION VORGESCHALTETEN LASTEN
SYSTEM FOR BUFFER STORAGE AND SEQUENCING OF LOADS UPSTREAM FROM AT LEAST ONE PREPARATION STATION

(30) Priorité: 22.12.2015 FR 1563151
(43) Date de publication de la demande: 31.10.2018
(73) Titulaire: Savoye, 21000 Dijon (FR)
(72) Inventeur: COLLIN, Jean-Michel, 21190 Merceuil (FR); PIETROWICZ, Stéphane, 21220 Fixin (FR)
(74) Mandataire: Vidon Brevets & Stratégie
(86) Numéro de dépôt international: PCT/EP2016/079813
(87) Numéro de publication internationale: WO 2017/108383

(56) Documents cités:
- EP-A1- 1 681 247
- EP-A1- 2 949 604
- EP-A1- 2 979 996
- WO-A1-2008/089980
- WO-A1-2014/023730
- WO-A1-91/13011
- CA-A1- 2 735 988
- DE-A1- 102007 010 191
- FR-A1- 2 967 145
- JP-A- S60 262 703
- US-A1- 2004 193 311
- US-A1- 2012 282 068
- US-A1- 2015 336 741

## Description

### 1. DOMAINE TECHNIQUE

Le domaine de l'invention est celui de la logistique.

La présente invention concerne plus précisément un système de stockage tampon et de séquencement de charges, configuré pour recevoir des charges non séquencées provenant d'au moins une unité externe (par exemple un magasin automatisé de stockage/déstockage) et fournir des charges séquencées à au moins un poste de préparation. Par « fourniture de charges séquencées », on entend la fourniture, sous une contrainte de délivrance, d'au moins une séquence comprenant des charges dans un ordre voulu.

La présente invention peut s'appliquer à n'importe quel type de poste de préparation, et notamment mais non exclusivement :
- aux postes de préparation de commandes (aussi appelés « postes de picking »), par prélèvements de produits dans des contenants de stockage (aussi appelés « charges sources ») : un opérateur (ou un robot) reçoit une liste de prélèvements (sur papier, sur écran d'un terminal, sous forme vocale, sous forme de mission informatique (dans le cas du robot), etc.) lui indiquant, pour chaque colis à expédier (aussi appelé « contenant d'expédition » ou « charge cible »), la quantité de chaque type de produits qu'il doit collecter dans des contenants de stockage et regrouper dans le colis à expédier ; et
- aux postes de palettisation de contenants de stockage (aussi appelés « charges sources ») contenant eux-mêmes des produits : un opérateur (ou un robot) reçoit une liste de prélèvements (sur papier, sur écran d'un terminal, sous forme vocale, sous forme de mission informatique (dans le cas du robot), etc.) lui indiquant, pour chaque palette à expédier (aussi appelée « contenant d'expédition » ou « charge cible »), la quantité de chaque type de contenants de stockage (par exemple des cartons) qu'il doit collecter et décharger sur la palette à expédier.

### 2. ARRIÈRE-PLAN TECHNOLOGIQUE

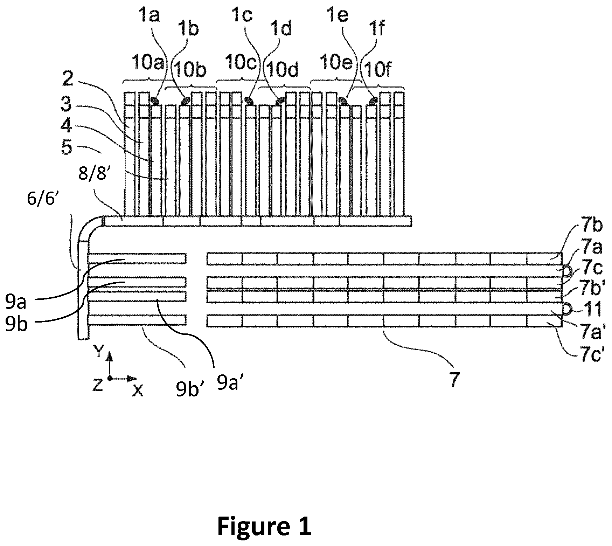

On présente maintenant, en relation avec la **figure 1****,** une vue de dessus d'un exemple de configuration connue pour un système automatisé de préparation de commandes comprenant :
- un magasin automatisé de stockage/déstockage 7 comprenant plusieurs (deux dans cet exemple) ensembles formés chacun d'une allée 7a, 7a' desservant de part et d'autre une étagère de stockage 7b, 7c, 7b', 7c' à plusieurs niveaux de rangements superposés ;
- un ensemble de convoyeurs amenant les charges sources depuis le magasin automatisé 7 jusqu'à des postes de préparation, et réciproquement. Dans l'exemple de la figure 1, on distingue :
   o pour l'aller (c-à-d du magasin automatisé 7 jusqu'aux postes de préparation), des convoyeurs référencés 9a et 9a' (un par allée) ainsi que 6 et 8 ; et
   o pour le retour (c-à-d des postes de préparation jusqu'au magasin automatisé 7), des convoyeurs référencés 8', 6' ainsi que 9b et 9b' (un par allée) ; dans cet exemple, les convoyeurs 6'et 8' sont superposés aux convoyeurs 6 et 8 ;
- plusieurs postes de préparation de commandes 10a à 10f, occupés chacun par un opérateur 1a à 1f et s'étendant perpendiculairement aux convoyeurs référencés 8 et 8' ; et
- un système de pilotage (aussi appelé « unité de pilotage »), qui est un système informatique de gestion central ayant en charge le pilotage de l'ensemble du système (magasin automatisé de stockage/déstockage 7, ensemble de convoyeurs 6, 6', 8, 8', 9a, 9a', 9b et 9b', et postes de préparation 10a à 10f).

Le système de pilotage gère également la liste de commandes associée à chaque contenant d'expédition (charge cible) et donc l'ordre des lignes de commande formant cette liste, en fonction de l'emplacement des contenants de stockage (charges sources) dans le magasin automatisé 7, de la disponibilité des chariots et des élévateurs du magasin automatisé 7, ainsi que des besoins en produits des différents contenants d'expédition à préparer qui se succèdent au poste de préparation. Ceci a pour but d'optimiser tous les déplacements et les temps de préparation des contenants d'expédition et d'assurer la synchronisation entre l'arrivée, au poste de préparation, d'un contenant d'expédition et des contenants de stockage correspondants (c-à-d contenant les produits indiqués dans la liste de commande associée à ce contenant de stockage).

Dans l'exemple de la figure 1, chaque poste de préparation comprend deux circuits de convoyeurs : un premier circuit de convoyeurs pour les contenants de stockage, formé de deux colonnes horizontales de convoyeurs : l'une (colonne aller 2) pour le déplacement des contenants de stockage depuis le troisième sous-ensemble de convoyeurs 8 jusqu'à l'opérateur 1a, et l'autre (colonne retour 3) pour le déplacement inverse ; et un deuxième circuit de convoyeurs pour les contenants d'expédition, formé de deux colonnes horizontales de convoyeurs : l'une (colonne aller 4) pour le déplacement des contenants d'expédition depuis le troisième sous-ensemble de convoyeurs 8 jusqu'à l'opérateur 1a, et l'autre (colonne retour 5) pour le déplacement inverse.

Une fonction de stockage tampon (aussi appelée « fonction d'accumulation ») d'une quantité déterminée de contenants en amont de l'opérateur (ou l'automate) est réalisée, dans chacun des premier et deuxième circuits, par la colonne aller 2 et 4 (composée de convoyeurs classiques horizontaux). Un contenant de stockage effectue donc le parcours suivant : il est prélevé par un chariot dans le magasin automatisé 7, puis convoyé successivement par l'un des convoyeurs 9a et 9a' (selon qu'il arrive de l'allée 7a ou 7a'), puis par les convoyeurs 6 et 8, et enfin par les convoyeurs de la colonne aller 2, pour être présenté à l'opérateur. Dans l'autre sens (après présentation à l'opérateur), le contenant de stockage effectue le parcours inverse : il est convoyé par les convoyeurs de la colonne retour 3, puis par les convoyeurs 8' et 6', et enfin par l'un des convoyeurs 9b et 9b' (selon qu'il retourne vers l'allée 7a ou 7a'), avant d'être replacé dans le magasin automatisé 7 par un chariot.

Comme mentionné plus haut, les contenants (charges sources et charges cibles) doivent être présentés à l'opérateur dans un ordre voulu formant au moins une séquence déterminée. De manière classique, cet ordre d'arrivée est prédéterminé par le système de pilotage (c'est-à-dire déterminé, pour chaque contenant, avant que ce contenant n'atteigne le poste de préparation) et, si nécessaire, recalculé au cours de l'acheminement des contenants de la sortie du magasin automatisé 7 vers le poste de préparation (par exemple pour tenir compte d'une panne d'un élément du système).

Dans une première implémentation connue (standard), un premier niveau de séquencement est réalisé en déposant sur chacun des convoyeurs 9a et 9a' des charges pré-séquencées (il y a donc des contraintes sur le magasin automatisé 7). En d'autres termes, les charges déposées sur le convoyeur 9a sont dans un ordre cohérent avec l'ordre final souhaité, et les charges déposées sur le convoyeur 9a' sont également dans un ordre cohérent avec l'ordre final souhaité. Puis, un deuxième niveau de séquencement est réalisé en déposant dans l'ordre final souhaité, sur le convoyeur 6, les charges venant des convoyeurs 9a et 9a'. Par exemple, pour une séquence de sept charges, si les charges de rangs 1, 2, 4 et 5 sont stockées dans l'allée 7a elles sont déposées dans cet ordre sur le convoyeur 9a et si les charges de rangs 3 et 6 sont stockées dans l'allée 7a' elles sont déposées dans cet ordre sur sur le convoyeur 9a' ; puis les sept charges sont déposées sur le convoyeur 6 dans l'ordre croissant (de 1 à 7) de leurs rangs.

Dans une deuxième implémentation connue, afin de relâcher les contraintes sur le magasin automatisé 7, on admet que les contenants ne sortent pas du magasin automatisé 7 dans l'ordre voulu (c'est-à-dire l'ordre dans lequel ils doivent être présentés à l'opérateur). Il est donc nécessaire d'effectuer une opération de séquencement des contenants, entre le magasin automatisé 7 et le poste de préparation où se trouve l'opérateur. La suppression des contraintes de séquencement pesant habituellement sur le magasin automatisé 7 permet une augmentation significative des performances de celui-ci (et plus généralement des différents équipements amont), et donc une réduction de sa taille et sa complexité, et donc de son coût. Dans l'exemple de la figure 1, cette opération de séquencement est effectuée comme suit : les contenants de stockage circulent en boucle sur les convoyeurs 6, 8, 8' et 6', et lorsque le contenant de stockage attendu sur les convoyeurs de la colonne aller 2 se présente devant cette dernière (afin de compléter la séquence de contenants de stockage attendus au poste de préparation), celui-ci est transféré sur les convoyeurs de la colonne aller 2, les autres contenants de stockage continuant à circuler dans la boucle précitée (convoyeurs 6, 8, 8' et 6'). Ce procédé est effectué pour chacun des contenants de stockage attendus dans la séquence (c'est-à-dire dans l'ordre d'arrivée souhaité au poste de préparation).

Les deux implémentations connues précitées (à base de convoyeurs classiques horizontaux), pour réaliser les fonctions de stockage tampon (accumulation) et de séquencement, présentent plusieurs inconvénients.

Tout d'abord, elles présentent une trop forte consommation de m² à faible hauteur de plan de roulement (750 mm typiquement). A titre d'exemple de cette emprise au sol trop élevée, la surface nécessaire pour six postes de préparation de commandes (comme dans l'exemple de la figure 1) est de l'ordre de 100 m².

Un autre inconvénient est que la densité au sol des convoyeurs classiques horizontaux (compris dans les postes de préparation) est telle qu'elle rend difficile l'accès maintenance à ces convoyeurs (nappe de convoyeurs trop dense).

Un autre inconvénient est que, sauf à augmenter encore l'emprise au sol du poste de préparation (en augmentant la longueur de la colonne aller de chacun des premier et deuxième circuits), il n'est pas possible d'augmenter le nombre de contenants pouvant être accumulés (stockage tampon) en amont de l'opérateur (ou l'automate).

L'invention, dans au moins un mode de réalisation, a notamment pour objectif de fournir un système de stockage tampon et de séquencement de charges permettant de pallier les inconvénients de la technique connue de la figure 1. En outre, le document CA 2 735 988 A1 divulgue un système de stockage tampon et de séquencement de charges selon le préambule de la revendication 1.

### 3. RÉSUMÉ

Selon l'invention, il est défini un système de stockage tampon et de séquencement de charges, configuré pour recevoir des charges non séquencées provenant d'au moins une unité externe, via au moins un convoyeur aller d'entrée compris dans ledit système, et fournir des charges séquencées à au moins un poste de préparation, via au moins un convoyeur aller de sortie compris dans ledit système, ledit système comprenant :
- un élévateur alternatif comprenant une unique nacelle comportant K niveaux permettant chacun de transporter au moins une charge, avec K ≥ 2 ;
- au moins une unité de stockage tampon comprenant une pluralité d'emplacements tampons, répartis sur une pluralité de niveaux et configurés chacun pour recevoir temporairement au moins une charge provenant de l'élévateur alternatif ; et
- une unité de pilotage configurée pour organiser :
   * des premiers mouvements de charges depuis ledit au moins un convoyeur aller d'entrée vers ladite au moins une unité de stockage tampon, via l'élévateur alternatif ; et
   * des deuxièmes mouvements de charges depuis ladite au moins une unité de stockage tampon vers ledit au moins un convoyeur aller de sortie, via l'élévateur alternatif, sous une contrainte de délivrance sur ledit au moins un convoyeur aller de sortie d'au moins une séquence comprenant des charges dans un ordre voulu, et où l'unité de pilotage est configurée pour organiser en outre des troisièmes mouvements de charges via l'élévateur alternatif, pour des charges ayant été traitées par ledit au moins un poste de préparation, depuis au moins un convoyeur retour d'entrée, compris dans ledit système, vers au moins une des entités appartenant au groupe comprenant :
- ladite au moins une unité de stockage tampon , pour des charges devant être à nouveau stockées ;
- ledit au moins un convoyeur aller de sortie , pour des charges devant être à nouveau présentées audit au moins un poste de préparation , sous ladite contrainte de délivrance ; et- au moins un convoyeur retour de sortie compris dans ledit système, pour des charges devant être renvoyées vers au moins une des entités appartenant au groupe comprenant ladite au moins une unité externe, au moins un autre poste de préparation et au moins une autre unité externe; et où ledit système comprend, entre l'élévateur alternatif et ledit au moins un convoyeur aller de sortie :
   - un dispositif de transfert de sortie comprenant K niveaux permettant chacun de recevoir au moins une charge ; et
   - un séquenceur de sortie pourvu de moyens de déplacement vertical ; et en ce que l'unité de pilotage est configurée pour piloter :
      - un transfert d'un groupe de N charges, depuis ladite au moins une unité de stockage tampon vers l'élévateur alternatif, avec N inférieur ou égal à une capacité de l'élévateur alternatif en nombre de charges ;
      - un transfert, simultanément sur les K niveaux, de chaque groupe de N charges depuis l'élévateur alternatif vers le dispositif de transfert de sortie ; et
      - un transfert de chaque groupe de N charges, via le séquenceur de sortie, depuis le dispositif de transfert de sortie vers ledit au moins un convoyeur aller de sortie, sous ladite contrainte de délivrance.

Le principe général du système proposé consiste à effectuer les fonctions de stockage tampon et de séquencement de charges en utilisant, selon sur une approche tout à fait nouvelle et inventive, un élévateur alternatif multi-niveau (avec une unique nacelle comprenant K niveaux) en combinaison avec au moins une unité de stockage tampon, sous le contrôle d'une unité de pilotage configurée pour organiser des premiers mouvements de charges et des seconds mouvements de charges.

Ladite au moins une unité externe (qui fournit les charges non séquencées) appartient par exemple à la liste non exhaustive suivante : un magasin automatisé de stockage/déstockage et au moins un autre système de stockage tampon et de séquencement de charges.

La capacité de séquencement (ordonnancement) du système proposé est liée à la quantité de charges pouvant être stockées temporairement dans la au moins une unité de stockage tampon.

La solution proposée présente de nombreux avantages, notamment mais non exclusivement :
- minimisation des contraintes de séquencement en sortie de la (ou les) unité(s) externe(s) par un séquencement en aval de celle(s)-ci, et au plus proche du (ou des) poste(s) de préparation ; cette minimisation des contraintes permettant de réduire la taille et la complexité, et donc le coût, de la (ou les) unité(s) externe(s) ;
- réduction de l'emprise au sol ;
- optimisation du rendement du système global (comprenant notamment la (ou les) unité(s) externe(s), le système de stockage tampon et de séquencement et le(s) poste(s) de préparation) ;
- optimisation de la réactivité du système global ;
- manipulation de charges multi-formats si des rouleaux motorisés sont utilisés ;
- optimisation des coûts si le système global comprend plusieurs postes de préparation (mutualisation du système de stockage tampon et de séquencement) ;
- etc.

En sortie du système de stockage tampon et de séquencement, plusieurs types de séquences de charges sont réalisables, et notamment mais non exclusivement :
- une séquence comprenant uniquement des charges sources, chaque charge source étant un contenant de stockage de produit(s) ; ou
- une séquence comprenant uniquement des charges cibles, chaque charge cible étant un contenant d'expédition de produit(s) ; ou
- une séquence comprenant une charge cible, qui est un contenant d'expédition de produit(s), suivie d'au moins une charge source, qui est un contenant de stockage de produit(s).

Plusieurs systèmes de stockage tampon et de séquencement (réalisés chacun selon la solution proposée) peuvent être utilisés en parallèle. Par exemple, en amont d'au moins un poste de préparation, un premier système de stockage tampon et de séquencement est utilisé uniquement pour des charges sources, et en parallèle un second système de stockage tampon et de séquencement est utilisé uniquement pour des charges cibles.

Diverses implémentations et caractéristiques sont précisées dans le jeu de revendications. Elles sont également détaillées (avec leurs avantages associés) et illustrées à travers des exemples dans la suite de la description.

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, est une vue de dessus d'un système automatisé de préparation de commandes ;
- la figure 2 est une vue de côté d'un premier exemple de système de stockage tampon et de séquencement de charges selon l'invention ;
- la figure 3 est une vue de côté d'un deuxième exemple de système de stockage tampon et de séquencement de charges selon l'invention ;
- la figure 4 est une vue de côté d'un troisième exemple de système de stockage tampon et de séquencement de charges selon l'invention ;
- la figure 5 est une vue de côté d'un quatrième exemple de système de stockage tampon et de séquencement de charges selon l'invention ;
- la figure 6 est une vue de côté d'un cinquième exemple de système de stockage tampon et de séquencement de charges selon l'invention ;
- la figure 7 est une vue de côté d'un sixième exemple de système de stockage tampon et de séquencement de charges selon l'invention ;
- la figure 8 est une vue de côté d'un septième exemple de système de stockage tampon et de séquencement de charges selon l'invention ;
- la figure 9 est une vue de côté d'un huitième exemple de système de stockage tampon et de séquencement de charges selon l'invention ;
- les figures 10a, 10b et 10c sont des vues, de côté, de dessus et de face respectivement, d'un neuvième exemple de système de stockage tampon et de séquencement de charges selon l'invention ;
- les figures 11a, 11b et 11c sont des vues, de côté, de dessus et de face respectivement, d'un dixième exemple de système de stockage tampon et de séquencement de charges selon l'invention ;
- les figures 12a, 12b et 12c sont des vues, de côté, de dessus et de face respectivement, d'un onzième exemple de système de stockage tampon et de séquencement de charges selon l'invention ;
- les figures 13a, 13b et 13c sont des vues, de côté, de dessus et de face respectivement, d'un douzième exemple de système de stockage tampon et de séquencement de charges selon l'invention ; et
- la figure 14 présente un exemple de structure d'une unité de pilotage selon un mode de réalisation particulier de l'invention.

### 5. DESCRIPTION DÉTAILLÉE

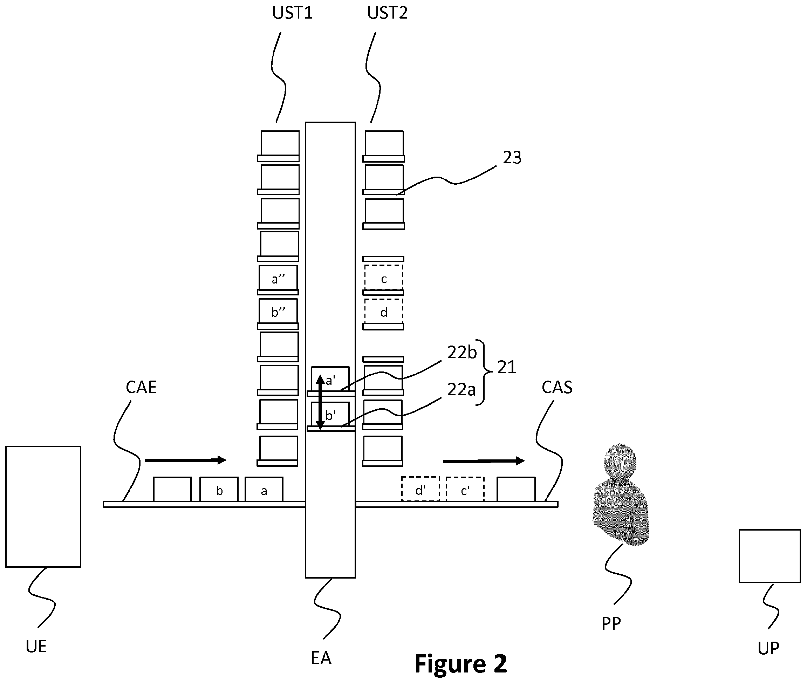

La **figure 2** illustre un premier exemple de système de stockage tampon et de séquencement de charges selon l'invention. Il est configuré pour recevoir des charges non séquencées provenant d'une unité externe UE, via un convoyeur aller d'entrée CAE, et fournir des charges séquencées à un poste de préparation PP (occupé par un opérateur ou un robot), via un convoyeur aller de sortie CAS. L'unité externe UE est par exemple un magasin automatisé de stockage/déstockage.

Dans une variante, l'unité externe UE est un autre système de stockage tampon et de séquencement de charges. Dans une autre variante, le système de stockage tampon et de séquencement de charges reçoit des charges non séquencées provenant de plusieurs unités externes (soit via plusieurs convoyeurs aller d'entrée CAE spécifiques chacun à une des unités externes, soit via un convoyeur aller d'entrée CAE utilisé conjointement par plusieurs unités externes).

Le système de stockage tampon et de séquencement de charges comprend un élévateur alternatif EA, deux unités de stockage tampon UST1, UST2 et une unité de pilotage UP.

L'élévateur alternatif EA est un élévateur vertical de type discontinu, comprenant une unique nacelle 21 effectuant des mouvements verticaux alternatifs (la nacelle monte et descend alternativement). Par opposition, un « élévateur continu » (aussi appelé « paternoster ») est un élévateur vertical comprenant une pluralité de nacelles circulant en boucle fermée, sans mouvement alternatif. L'unique nacelle 21 comporte K niveaux, avec K ≥ 2 comprenant chacun un emplacement (ou position) configuré pour recevoir une charge. Dans l'exemple illustré sur la figure 2, l'unique nacelle 21 comporte deux niveaux 22a, 22b (K=2).

L'élévateur alternatif a donc une capacité de 2x1 charges. Chacun des emplacements de nacelle est par exemple équipé d'une section de convoyeur motorisé (ou de tout dispositif de transfert) permettant de transférer une charge sur ou en dehors de la nacelle. Dans une variante, chaque emplacement de nacelle est équipé de rouleaux libres, dont la mise en mouvement est par exemple assurée par un moyen mécanique escamotable positionné en bout d'un autre équipement (convoyeur ou emplacement tampon). D'autres moyens de mise en mouvement peuvent être envisagés.

Chacune des deux unités de stockage tampon UST1, UST2 comprend une pluralité d'emplacements tampons 23, répartis sur une pluralité de niveaux (un emplacement tampon par niveau) et configurés chacun pour recevoir temporairement au moins une charge provenant de l'élévateur alternatif. Les deux unités de stockage tampon UST1, UST2 sont disposées verticalement de part et d'autre de l'élévateur alternatif EA. Chacun des niveaux de la nacelle de l'élévateur alternatif EA peut venir en regard de chacun des niveaux de chacune des unités de stockage tampon UST1, UST2 pour un transfert d'au moins une charge. L'utilisation de deux unités de stockage tampon ainsi disposées permet d'augmenter la capacité et la cadence du système de stockage tampon et de séquencement.

Dans une implémentation particulière permettant de limiter les mouvements de l'élévateur alternatif EA, le pas (c-à-d l'espacement entre deux niveaux successifs) de la nacelle de l'élévateur alternatif EA est égal ou est un multiple du pas (c-à-d l'espacement entre deux niveaux successifs) des unités de stockage tampon UST1, UST2.

L'unité de pilotage UP permet d'organiser de façon optimale les mouvements des charges dans le système, et notamment sur l'élévateur alternatif EA et les unités de stockage tampon UST1, UST2, afin de mettre à disposition sur le convoyeur aller de sortie CAS des charges sources selon une séquence déterminée. A cet effet, l'unité de pilotage UP reçoit des informations (notamment un identifiant de charge) lues, sur les charges passant à différents endroits du système, par des dispositifs de lecture (non représentés), de type lecteur code à barre, lecteur d'étiquette RFID, etc. Ces endroits sont par exemple situés aux extrémités des différents convoyeurs.

Plus précisément, l'unité de pilotage UP organise des premiers mouvements de charges depuis le convoyeur aller d'entrée CAE vers les unités de stockage tampon UST1, UST2, via l'élévateur alternatif EA. Elle organise également des deuxièmes mouvements de charges depuis les unités de stockage tampon UST1, UST2 vers le convoyeur aller de sortie CAS, via l'élévateur alternatif EA, sous une contrainte de délivrance sur le convoyeur aller de sortie CAS d'au moins une séquence comprenant des charges dans un ordre voulu.

Dans une implémentation particulière, une partie des premiers mouvements de charges est réalisée en même temps qu'une partie des deuxièmes mouvements de charges.

Par exemple, l'unité de pilotage UP est configurée pour organiser, à chaque fois que c'est possible :
- un transfert de premières charges (par exemple celles notées « a » et « b » sur la figure 1) depuis l'élévateur alternatif EA vers les unités de stockage tampon UST1, UST2 en même temps qu'un transfert de deuxièmes charges (par exemple celles notées « c » et « d » sur la figure 1) depuis les unités de stockage tampon UST1, UST2 vers l'élévateur alternatif EA. A défaut ces deux transferts sont effectués successivement ; et/ou
- un transfert des deuxièmes charges depuis l'élévateur alternatif EA vers le convoyeur aller de sortie CAS en même temps qu'un transfert de troisièmes charges (non représentées sur la figure 1) depuis le convoyeur aller d'entrée CAE vers l'élévateur alternatif EA. A défaut ces deux transferts sont effectués successivement.

Cette combinaison des premiers et seconds mouvements de charges permet d'augmenter la cadence du système de stockage tampon et de séquencement.

Sur la figure 1 (et également sur les autres figures décrites ci-après), certaines charges sont référencées avec des lettres (« a », « b », « c », « d ») pour illustrer le fonctionnement du système. Afin de faire apparaître sur la même figure des positions successives d'une même charge, la notation suivante est utilisée : pour une première position, la charge est référencée seulement avec sa lettre associée (par exemple « a »), pour une deuxième position, la charge est référencée avec sa lettre associée suivie du symbole prime (par exemple « a' »), pour une troisième position, la charge est référencée avec sa lettre associée suivie du symbole double prime (par exemple « a" »), etc. Ainsi, sur la figure 1, la charge « a » se trouve d'abord sur le convoyeur aller d'entrée CAE, puis sur l'élévateur alternatif EA (elle est alors notée « a' »), et enfin dans l'une des unités de stockage tampon UST1, UST2 (elle est alors notée « a'' »).

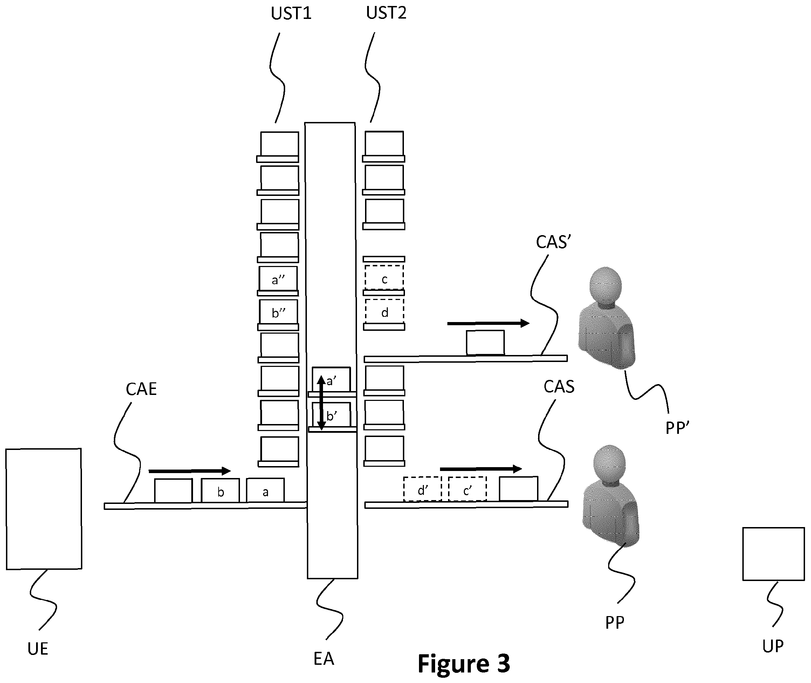

La **figure 3** illustre un deuxième exemple de système de stockage tampon et de séquencement de charges selon l'invention. Il se distingue du premier exemple illustré sur la figure 1 en ce qu'il fournit des charges séquencées également à un autre poste de préparation PP', via un autre convoyeur aller de sortie CAS'. Les deux convoyeurs aller de sortie CAS, CAS' sont situés sur deux niveaux différents. Dans une variante, le nombre de postes de préparation est supérieur à deux. Dans une autre variante, un même convoyeur aller de sortie CAS est utilisé en combinaison avec un système d'aiguillage approprié, pour desservir plusieurs postes de préparation.

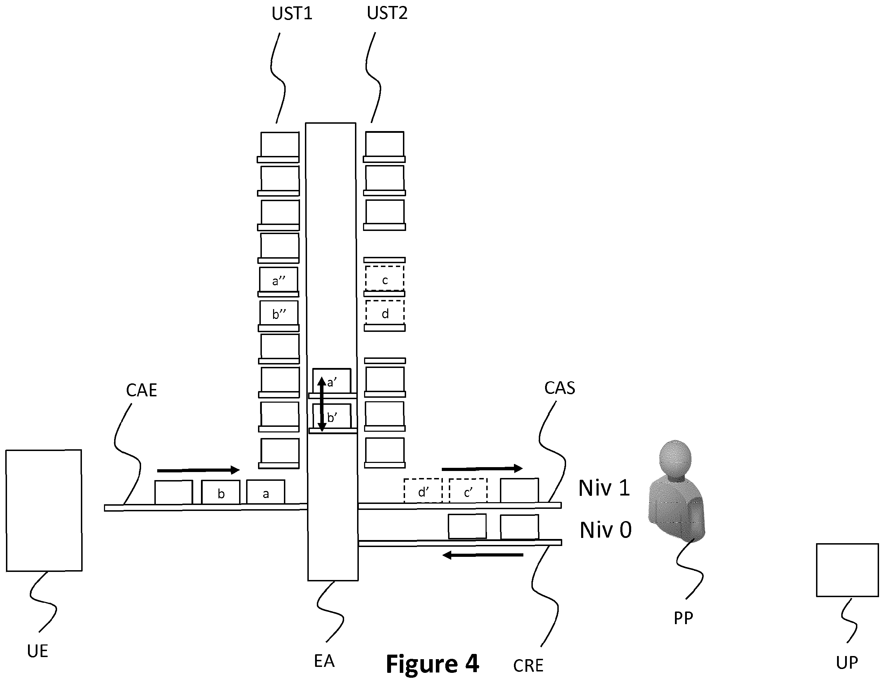

La **figure 4** illustre un troisième exemple de système de stockage tampon et de séquencement de charges selon l'invention. Il se distingue du premier exemple illustré sur la figure 1 en ce qu'il comprend un convoyeur retour d'entrée CRE permettant le retour vers l'élévateur alternatif EA de charges ayant été traitées par le poste de préparation PP.

Dans cet exemple, le convoyeur aller d'entrée CAE et le convoyeur aller de sortie CAS sont positionnés à une même hauteur (niveau référencé « Niv 1 »), de part et d'autre de l'élévateur alternatif EA. Le convoyeur retour d'entrée CRE est positionné à une hauteur plus basse (niveau référencé « Niv 0 »). Le convoyeur aller de sortie CAS et le convoyeur retour d'entrée CRE sont parallèles et adjacents verticalement. Dans une mise en œuvre particulière, ils présentent entre eux un écartement vertical égal à un écartement vertical entre deux niveaux successifs de la nacelle de l'élévateur alternatif EA.

Pour les charges revenant du poste de préparation PP, l'unité de pilotage UP est configurée pour organiser en outre des troisièmes mouvements de charges depuis le convoyeur retour d'entrée CRE vers une ou plusieurs entités accessibles via l'élévateur alternatif EA, notamment :
- les unités de stockage tampon UST1, UST2, pour des charges devant être à nouveau stockées ; et
- le convoyeur aller de sortie CAS, pour des charges devant être à nouveau présentée au poste de préparation PP, sous la contrainte de délivrance (contrainte de séquencement).

Dans une variante du troisième exemple de système de stockage tampon et de séquencement de charges, la nacelle de l'élévateur alternatif comprend un niveau unique comportant un ou plusieurs emplacements de charge.

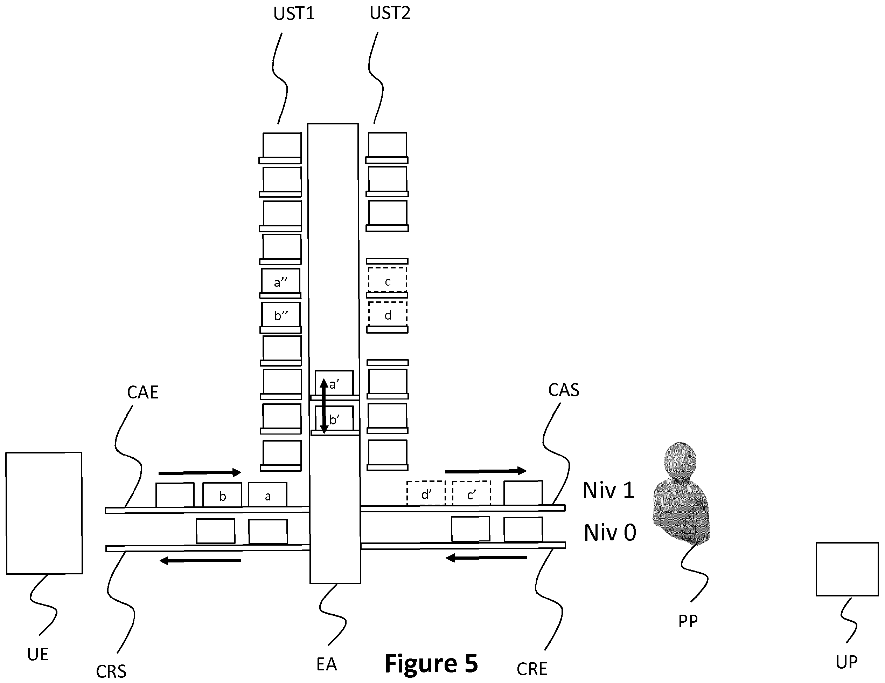

La **figure 5** illustre un quatrième exemple de système de stockage tampon et de séquencement de charges selon l'invention. Il se distingue du troisième exemple illustré sur la figure 4 en ce qu'il comprend un convoyeur retour de sortie CRS, pour des charges devant être renvoyées vers l'unité externe UE. Dans une variante, il y a plusieurs convoyeurs retour de sortie, permettant chacun un retour de charges vers une unité externe particulière. L'unité externe (ou chacune des unités externes) est une entité supplémentaire vers laquelle l'unité de pilotage UP peut organiser les troisièmes mouvements de charges, pour les charges revenant du poste de préparation PP.

Dans cet exemple, le convoyeur retour de sortie CRS et le convoyeur retour d'entrée CRE sont positionnés à une même hauteur (niveau référencé « Niv 0 »), de part et d'autre de l'élévateur alternatif EA. Le convoyeur aller d'entrée CAE et le convoyeur retour de sortie CRS sont parallèles et adjacents verticalement. Dans une mise en œuvre particulière, ils présentent entre eux un écartement vertical égal à un écartement vertical entre deux niveaux successifs de la nacelle de l'élévateur alternatif EA.

Ainsi, plusieurs types de retours sont possibles, permettant de minimiser l'utilisation de ladite au moins une unité externe et d'améliorer encore la réactivité du système global :
- premiers retours vers les unités de stockage tampon UST1, UST2 ;
- deuxièmes retours vers le poste de préparation PP (via le convoyeur aller de sortie) ; et
- troisièmes retours vers l'unité externe UE, ou bien vers au moins un autre poste de préparation, ou encore vers au moins une autre unité externe (autre magasin automatisé de stockage/déstockage, ou autre système de stockage tampon et de séquencement de charges).

Dans une implémentation particulière, une partie des deuxièmes mouvements de charges est réalisée en même temps qu'une partie des troisièmes mouvements de charges. De même, une partie des troisièmes mouvements de charges est réalisée en même temps qu'une partie des premiers mouvements de charges.

Par exemple, l'unité de pilotage UP est configurée pour organiser, à chaque fois que c'est possible :
- un transfert de premières charges depuis l'élévateur alternatif EA vers les unités de stockage tampon UST1, UST2 en même temps qu'un transfert de deuxièmes charges depuis les unités de stockage tampon UST1, UST2 vers l'élévateur alternatif EA. A défaut ces deux transferts sont effectués successivement ;
- un transfert des deuxièmes charges depuis l'élévateur alternatif EA vers le convoyeur aller de sortie CAS en même temps qu'un transfert de troisièmes charges depuis le convoyeur retour d'entrée CRE vers l'élévateur alternatif EA. A défaut ces deux transferts sont effectués successivement ;
- un transfert des troisièmes charges depuis l'élévateur alternatif EA vers le convoyeur retour de sortie CRS ou les unités de stockage tampon UST1, UST2 en même temps qu'un transfert de quatrièmes charges depuis le convoyeur aller d'entrée CAE vers l'élévateur alternatif EA ou les unités de stockage tampon UST1, UST2. A défaut ces deux transferts sont effectués successivement.

Cette combinaison des premiers, seconds et troisième mouvements de charges permet d'augmenter la cadence du système de stockage tampon et de séquencement.

Dans une variante du quatrième exemple de système de stockage tampon et de séquencement de charges, la nacelle de l'élévateur alternatif comprend un niveau unique comportant un ou plusieurs emplacements de charge.

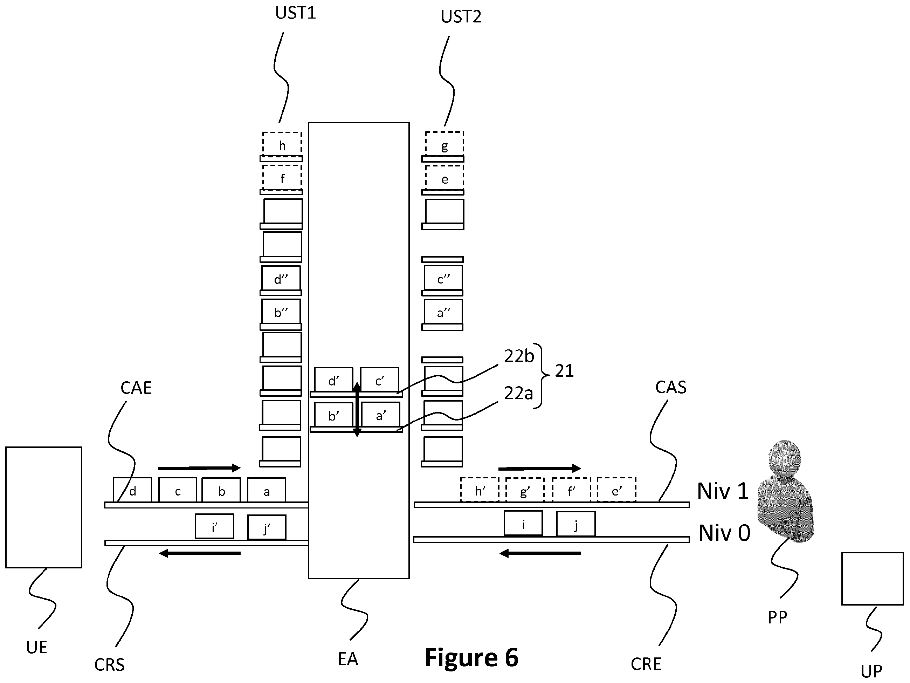

La **figure 6** illustre un cinquième exemple de système de stockage tampon et de séquencement de charges selon l'invention. Il se distingue du quatrième exemple illustré sur la figure 5 en ce que chaque niveau 22a, 22b de l'unique nacelle 21 de l'élévateur alternatif EA comprend une rangée de deux emplacements. L'élévateur alternatif a donc une capacité de KxL charges, avec K le nombre de niveaux et L le nombre de charges par niveau (dans l'exemple illustré sur la figure 6, la capacité est de 2x2 charges).

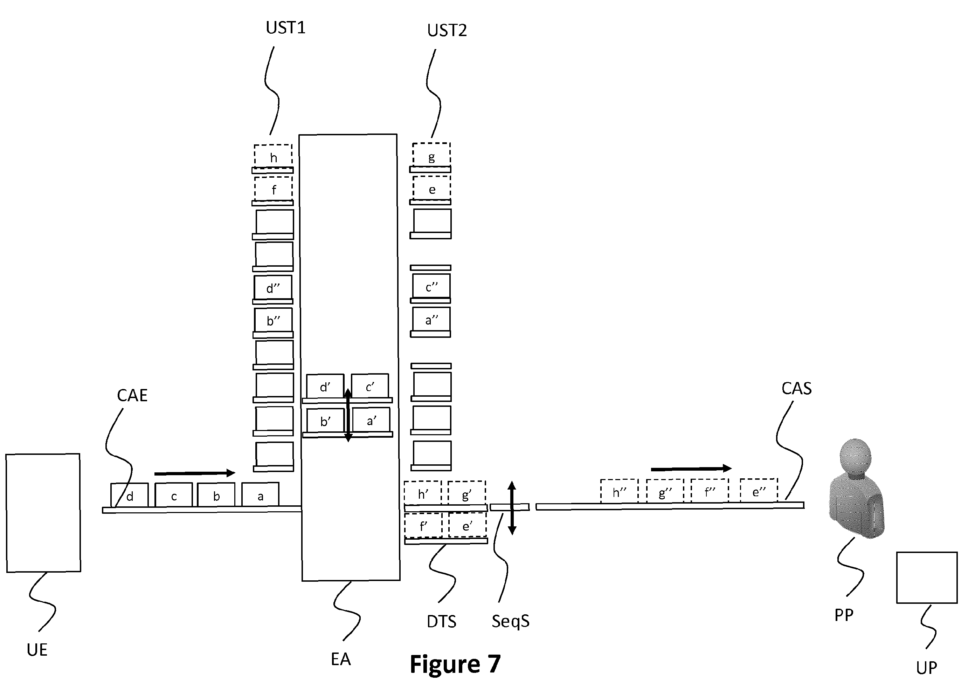

La **figure 7** illustre un sixième exemple de système de stockage tampon et de séquencement de charges selon l'invention. Il se distingue du cinquième exemple illustré sur la figure 6 en ce qu'il comprend, entre l'élévateur alternatif EA et le convoyeur aller de sortie CAS, un dispositif de transfert de sortie DTS et un séquenceur de sortie SeqS. Par ailleurs, dans ce sixième exemple, le système ne comprend pas le convoyeur retour d'entrée CRE ni le convoyeur retour de sortie CRS. Dans une variante, il les comprend.

Le dispositif de transfert de sortie DTS comprend deux niveaux permettant chacun de recevoir deux charges. Plus généralement, il comprend le même nombre K de niveaux que l'élévateur alternatif, et chacun de ses niveaux peut recevoir le même nombre L de charges que chacun des niveaux de l'élévateur alternatif. Chacun des emplacements du dispositif de transfert de sortie DTS est par exemple équipé d'une section de convoyeur motorisé (ou de tout dispositif de transfert) permettant de transférer une charge sur ou en dehors du dispositif de transfert de sortie DTS. Dans une variante, chacun de ces emplacement est équipé de rouleaux libres, dont la mise en mouvement est par exemple assurée par un moyen mécanique escamotable positionné en bout d'un autre équipement (convoyeur ou élévateur alternatif). D'autres moyens de mise en mouvement peuvent être envisagés. Pour réaliser un transfert simultané de KxL charges au maximum (2x2 charges dans l'exemple de la figure 7), les K niveaux de l'élévateur alternatif EA sont alignés avec les K niveaux du dispositif de transfert de sortie DTS.

Le séquenceur de sortie SeqS est pourvu de moyens de déplacement vertical. Il est apte à transférer des charges entre le dispositif de transfert de sortie DTS et le convoyeur aller de sortie CAS. Le séquenceur de sortie SeqS est un dispositif de type table élévatrice avec plateforme, ou tout autre dispositif équivalent qui permet le déplacement vertical d'une charge. Dans cet exemple, le séquenceur de sortie SeqS comprend un seul niveau (i.e. une seule plateforme) qui est équipé d'une portion de convoyeur motorisé permettant le déplacement horizontal d'une charge.

L'unité de pilotage UP est configurée pour piloter :
- un transfert d'un groupe de N charges, depuis les unités de stockage tampon UST1, UST2 vers l'élévateur alternatif EA, avec N inférieur ou égal à une capacité C de l'élévateur alternatif EA en nombre de charges (C=KxL). Pour chaque groupe de N charges, le séquencement des charges placées à chaque niveau de l'élévateur alternatif est cohérent avec la contrainte de délivrance (contrainte de séquencement sur le convoyeur aller de sortie CAS). Ainsi, le séquencement des charges sur chaque niveau de l'élévateur alternatif (séquencement qui est conservé sur chaque niveau du dispositif de transfert de sortie) permet de simplifier la fonction de séquencement réalisée par le séquenceur de sortie ;
- un transfert, simultanément sur les K niveaux, de chaque groupe de N charges depuis l'élévateur alternatif EA vers le dispositif de transfert de sortie DTS ; et
- un transfert de chaque groupe de N charges, via le séquenceur de sortie SeqS, depuis le dispositif de transfert de sortie DTS vers le convoyeur aller de sortie CAS, sous la contrainte de délivrance (contrainte de séquencement).

Dans ce sixième exemple, pour le transfert des charges depuis l'élévateur alternatif EA vers le poste de préparation PP, l'élévateur alternatif est donc utilisé en combinaison avec deux autres éléments :
- un dispositif de transfert de sortie DTS, qui assure une fonction de tampon complémentaire, permettant de mettre en attente un groupe de N charges, après leur déchargement par l'élévateur alternatif ; et
- un séquenceur de sortie SeqS, qui participe à la réalisation de la fonction de séquencement.

Cette combinaison de trois éléments permet d'accroître de façon significative la cadence générale du système de stockage tampon et de séquencement, tout en respectant les contraintes de séquencement.

Dans une variante, le dispositif de transfert de sortie DTS est pourvu de moyens de déplacement vertical (moyens de type élévateur alternatif avec plateforme, ou tout autre moyen équivalent permettant le déplacement vertical des charges entre deux ou plusieurs niveaux) et remplace le séquenceur de sortie SeqS. Cette variante est donc plus compacte et permet de réduire le matériel nécessaire. L'unité de pilotage UP est configurée pour piloter un transfert de chaque groupe de N charges directement depuis le dispositif de transfert de sortie DTS vers le convoyeur aller de sortie CAS. Par exemple, le niveau haut du dispositif de transfert de sortie DTS s'aligne horizontalement avec le convoyeur aller de sortie CAS, pour décharger deux charges (par exemple « e » et « f »), puis le niveau bas du dispositif de transfert de sortie DTS s'aligne horizontalement avec le convoyeur aller de sortie CAS, pour décharger deux autres charges (par exemple « g » et « h »), respectant ainsi la séquence.

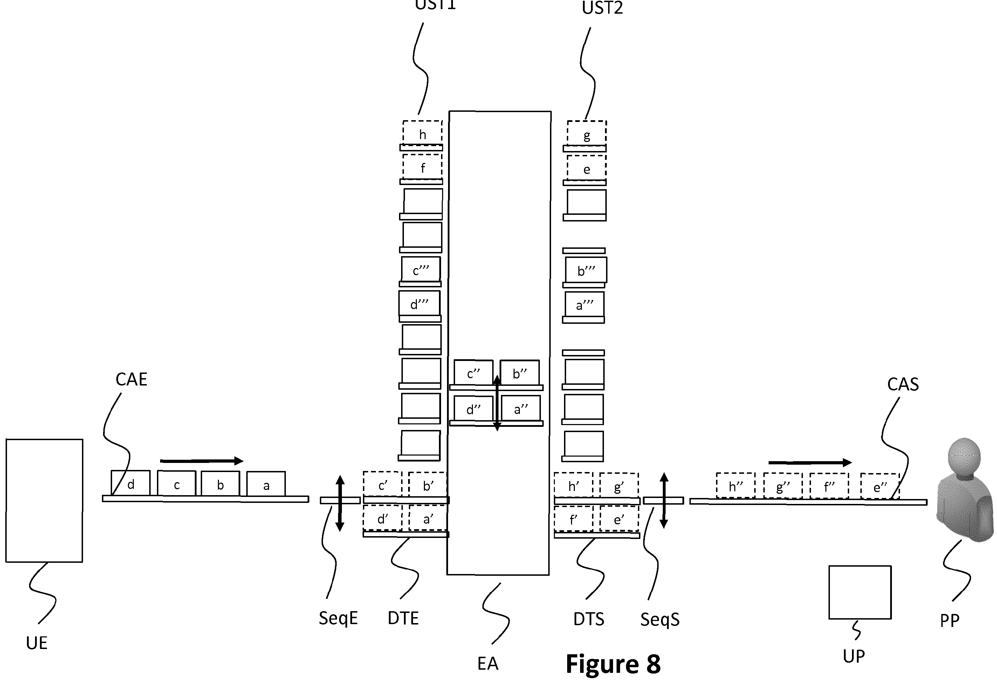

La **figure 8** illustre un septième exemple de système de stockage tampon et de séquencement de charges selon l'invention. Il se distingue du sixième exemple illustré sur la figure 7 en ce qu'il comprend, entre le convoyeur aller d'entrée CAE et l'élévateur alternatif EA, un dispositif de transfert d'entrée DTE et un séquenceur d'entrée SeqE.

Le dispositif de transfert d'entrée DTE comprend deux niveaux permettant chacun de recevoir deux charges. Plus généralement, il comprend le même nombre K de niveaux que l'élévateur alternatif, et chacun de ses niveaux peut recevoir le même nombre L de charges que chacun des niveaux de l'élévateur alternatif. Chacun des emplacements du dispositif de transfert d'entrée DTE est par exemple équipé d'une section de convoyeur motorisé (ou de tout autre dispositif de transfert) permettant de transférer une charge sur ou en dehors du dispositif de transfert d'entrée DTE. Dans une variante, chacun de ces emplacement est équipé de rouleaux libres, dont la mise en mouvement est par exemple assurée par un moyen mécanique escamotable positionné en bout d'un autre équipement (convoyeur ou élévateur alternatif). D'autres moyens de mise en mouvement peuvent être envisagés. Pour réaliser un transfert simultané de KxL charges au maximum (2x2 charges dans l'exemple de la figure 8), les K niveaux de l'élévateur alternatif EA sont alignés avec les K niveaux du dispositif de transfert d'entrée DTE.

Le séquenceur d'entrée SeqE est pourvu de moyens de déplacement vertical. Il est apte à transférer des charges entre le convoyeur aller d'entrée CAE et le dispositif de transfert d'entrée DTE. Le séquenceur d'entrée SeqE est un dispositif de type table élévatrice avec plateforme, ou tout autre dispositif équivalent qui permet le déplacement vertical d'une charge. Dans cet exemple, le séquenceur d'entrée SeqE comprend un seul niveau (i.e. une seule plateforme) qui est équipé d'une portion de convoyeur motorisé permettant le déplacement horizontal d'une charge.

L'unité de pilotage UP est configurée pour piloter :
- un transfert de charges, via le séquenceur d'entrée SeqE, depuis le convoyeur aller d'entrée CAE vers le dispositif de transfert d'entrée DTE, en formant dans le dispositif de transfert d'entrée des groupes de N' charges réparties sur les différents niveaux, avec N' inférieur ou égal à la capacité C de l'élévateur alternatif en nombre de charges (C=KxL). Pour chaque groupe de N' charges, le séquencement des charges placées à chaque niveau du dispositif de transfert d'entrée DTE est cohérent avec une contrainte de dépôt des N' charges dans les unités de stockage tampon UST1, UST2. Ainsi, le séquencement des charges sur chaque niveau du dispositif de transfert d'entrée DTE (séquencement qui est conservé sur chaque niveau de l'élévateur alternatif) permet de simplifier la réalisation de la contrainte de dépôt des N' charges (dans les unités de stockage tampon) ;
- un transfert, simultanément sur les K niveaux, de chaque groupe de N' charges depuis le dispositif de transfert d'entrée DTE vers l'élévateur alternatif ; et
- un transfert de chaque groupe de N' charges, depuis l'élévateur alternatif vers les unités de stockage tampon UST1, UST2, sous la contrainte de dépôt des N' charges.

Dans ce septième exemple, pour le transfert des charges depuis l'unité externe UE vers l'élévateur alternatif EA, l'élévateur alternatif est donc utilisé en combinaison avec deux autres éléments :
- un dispositif de transfert d'entrée DTE, qui assure une fonction de tampon complémentaire, permettant de mettre en attente un groupe de N charges, avant leur chargement sur l'élévateur alternatif lui aussi multi-niveau ; et
- un séquenceur d'entrée SeqE, qui permet de transférer des charges selon un ordre déterminé vers le dispositif de transfert d'entrée DTE.

Cette combinaison de trois éléments permet d'optimiser la cadence générale du système de stockage tampon et de séquencement, tout en respectant les contraintes de placement des charges dans les unités de stockage tampon UST1, UST2.

Dans une variante, le dispositif de transfert d'entrée DTE est pourvu de moyens de déplacement vertical (moyens de type élévateur alternatif avec plateforme, ou tout autre moyen équivalent permettant le déplacement vertical des charges entre deux ou plusieurs niveaux) et remplace le séquenceur d'entrée SeqE. Cette variante est donc plus compacte et permet de réduire le matériel nécessaire. L'unité de pilotage UP est configurée pour piloter un transfert de chaque groupe de N' charges directement depuis le convoyeur aller d'entrée CAE vers le dispositif de transfert d'entrée DTE. Par exemple, le niveau bas du dispositif de transfert d'entrée DTE s'aligne horizontalement avec le convoyeur aller d'entrée CAE, pour charger une charge (par exemple « a »), puis le niveau haut du dispositif de transfert d'entrée DTE s'aligne horizontalement avec le convoyeur aller d'entrée CAE, pour décharger une autre charge (par exemple « b »), etc.

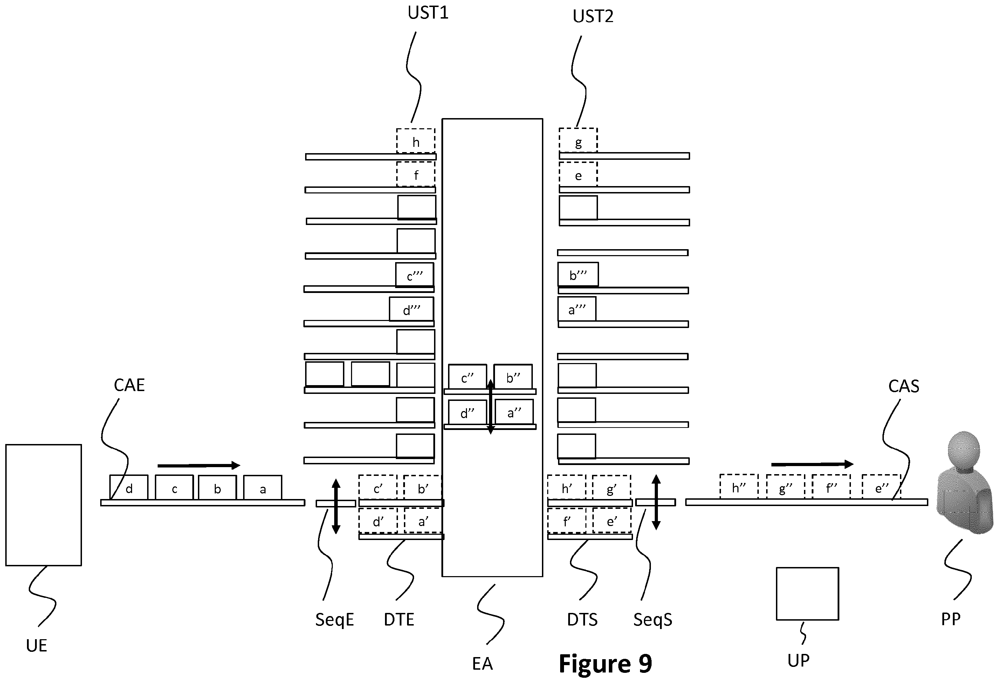

La **figure 9** illustre un huitième exemple de système de stockage tampon et de séquencement de charges selon l'invention. Il se distingue du septième exemple illustré sur la figure 8 en ce que chaque niveau de chacune des deux unités de stockage tampon UST1, UST2 est multicharge, c'est-à-dire comprend plusieurs (par exemple trois) emplacements tampons.

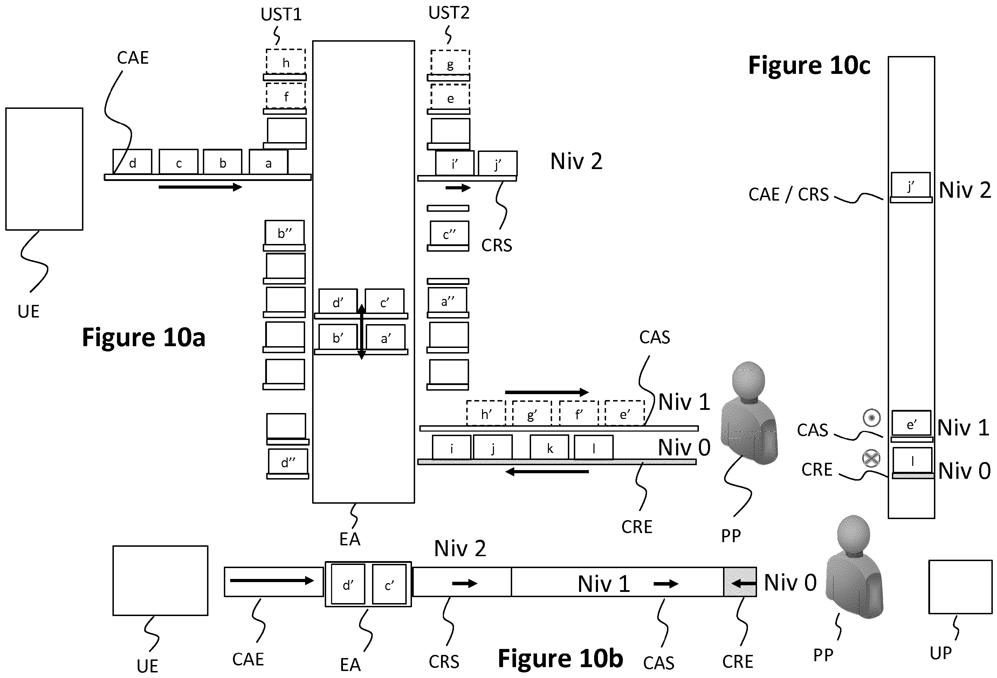

Les **figures 10a, 10b** **et 10c** illustrent un neuvième exemple de système de stockage tampon et de séquencement de charges selon l'invention. Il se distingue du cinquième exemple illustré sur la figure 6 en ce que le convoyeur aller d'entrée CAE et le convoyeur retour de sortie CRS sont positionnés à une même hauteur (niveau référencé « Niv 2 »), de part et d'autre de l'élévateur alternatif EA.

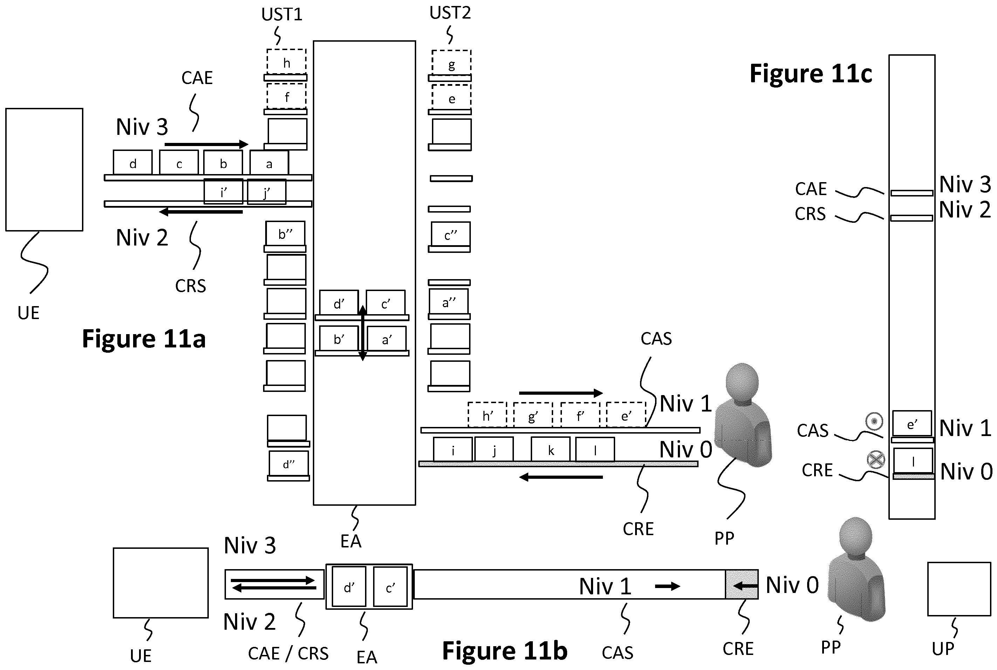

Les **figures 11a, 11b** **et 11c** illustrent un dixième exemple de système de stockage tampon et de séquencement de charges selon l'invention. Il se distingue du neuvième exemple illustré sur les figures 10a, 10b et 10c en ce que le convoyeur aller d'entrée CAE et le convoyeur retour de sortie CRS sont parallèles et adjacents verticalement. Dans une mise en œuvre particulière, ils présentent entre eux un écartement vertical égal à un écartement vertical entre deux niveaux successifs de la nacelle de l'élévateur alternatif EA. Dans cet exemple, le convoyeur aller d'entrée CAE est positionné à une hauteur (niveau référencé « Niv 3 ») plus haute que celle (niveau référencé « Niv 2 ») du convoyeur retour de sortie CRS.

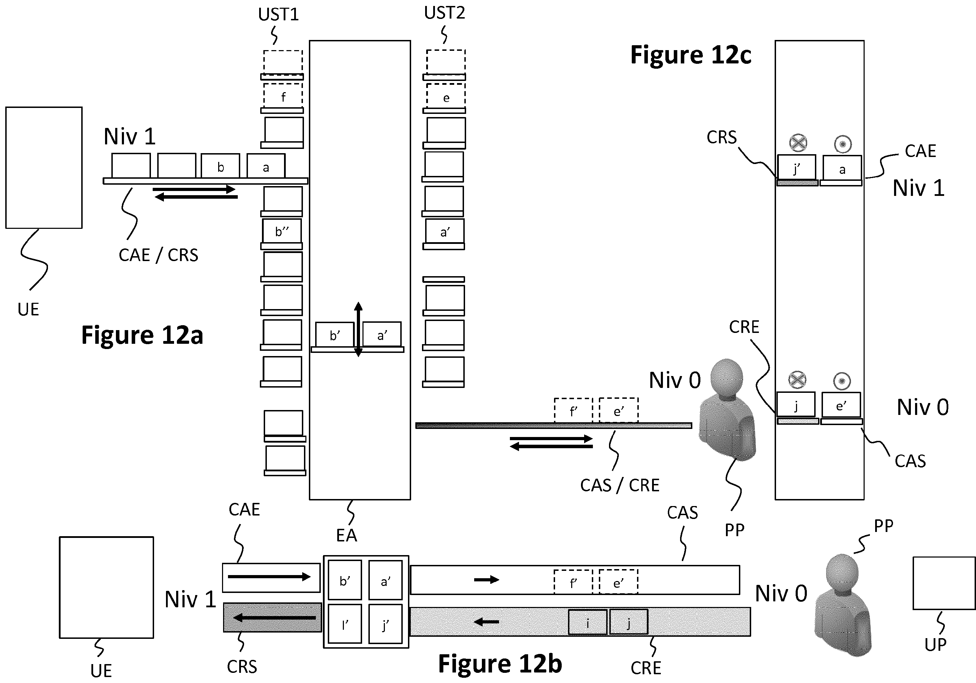

Les **figures 12a, 12b et 12c** illustrent un onzième exemple de système de stockage tampon et de séquencement de charges selon l'invention. Il se distingue du neuvième exemple illustré sur les figures 10a, 10b et 10c en ce que :
- la nacelle de l'élévateur alternatif comprend un niveau unique avec deux rangées de deux emplacements de charge. Sur la figure 12b (vue de dessus), une rangée contient les charges « a » et « b », et l'autre rangée les charges « i » et « j » ;
- le convoyeur aller de sortie CAS et le convoyeur retour d'entrée CRE sont parallèles, adjacents horizontalement (au niveau référencé « Niv 0 ») et présentent entre eux un écartement horizontal égal à un écartement horizontal entre les deux rangées du niveau unique de la nacelle de l'élévateur alternatif EA. Le positionnement de ces convoyeurs CAS et CRE par rapport à l'élévateur alternatif EA est tel qu'il est possible d'effectuer simultanément des transfert de charges d'une part entre le convoyeur aller de sortie CAS et une des deux rangées du niveau unique de la nacelle de l'élévateur alternatif EA, et d'autre part entre le convoyeur retour d'entrée CRE et l'autre des deux rangées du niveau unique de la nacelle de l'élévateur alternatif EA ;
- le convoyeur aller d'entrée CAE et le convoyeur retour de sortie CRS sont parallèles, adjacents horizontalement (au niveau référencé « Niv 1 ») et présentent entre eux un écartement horizontal égal à un écartement horizontal entre les deux rangées du niveau unique de la nacelle de l'élévateur alternatif EA. Le positionnement de ces convoyeurs CAE et CRS par rapport à l'élévateur alternatif EA est tel qu'il est possible d'effectuer simultanément des transfert de charges d'une part entre le convoyeur aller d'entrée CAE et une des deux rangées du niveau unique de la nacelle de l'élévateur alternatif EA, et d'autre part entre le convoyeur retour de sortie CRS et l'autre des deux rangées du niveau unique de la nacelle de l'élévateur alternatif EA.

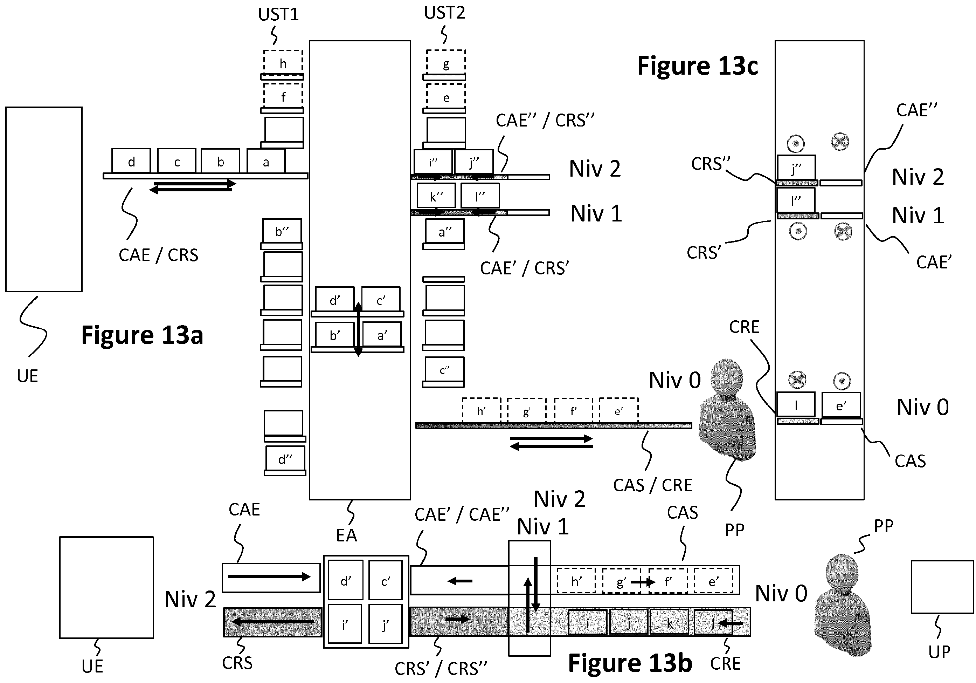

Les **figures 13a, 13b et 13c** illustrent un douzième exemple de système de stockage tampon et de séquencement de charges selon l'invention. Il se distingue du onzième exemple illustré sur les figures 12a, 12b et 12c en ce que la nacelle de l'élévateur alternatif comprend K niveaux, avec K ≥ 2 (dans l'exemple illustré sur les figures 13a, 13b et 13c, on a K=2), comportant chacun deux rangées de deux emplacements de charge. Sur la figure 13b (vue de dessus), le niveau haut de la nacelle de l'élévateur alternatif comprend une première rangée, qui contient les charges « c » et « d », et une deuxième rangée, qui contient les charges « i » et « j ». Comme visible partiellement sur la figure 13b (vue de côté), le niveau bas de la nacelle de l'élévateur alternatif comprend une première rangée, qui contient les charges « a » et « b », et une deuxième rangée, qui contient les charges « k » et « 1 ».

Le douzième exemple illustre également la possibilité que le système comprenne une ou plusieurs paires de convoyeurs supplémentaires, associant chacune un convoyeur aller d'entrée et un convoyeur retour de sortie, et permettant des échanges (aller et retour) de charges avec une autre unité externe (non représentée). Cette autre unité externe est par exemple un magasin automatisé de stockage/déstockage ou un autre système de stockage tampon et de séquencement de charges.

Ainsi, sur les figures 13a, 13b et 13c, le système comprend une première paire de convoyeurs supplémentaires notés CAE' et CRS', positionnés au niveau référencé « Niv 1 », et une deuxième paire de convoyeurs supplémentaires notés CAE" et CRS", positionnés au niveau référencé « Niv 2 ».

La configuration de chacun des neuvième, dixième, onzième et douzième exemples permet de combiner le retour des charges du poste de préparation PP vers le(s) convoyeur(s) retour de sortie CRS (CRS', CRS") ou les unités de stockage tampon UST1, UST2, en perturbant au minimum le flux de charges séquencées sur le convoyeur aller de sortie CAS.

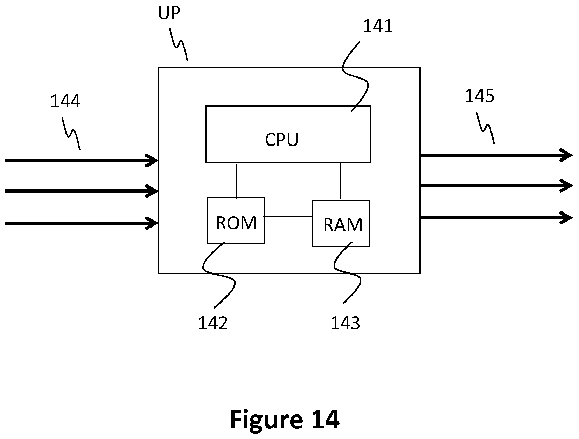

La **figure 14** présente un exemple de structure de l'unité de pilotage UP précitée, selon un mode de réalisation particulier de l'invention. L'unité de pilotage UP comprend une mémoire vive 143 (par exemple une mémoire RAM), une unité de traitement 141, équipée par exemple d'un processeur, et pilotée par un programme d'ordinateur stocké dans une mémoire morte 142 (par exemple une mémoire ROM ou un disque dur). A l'initialisation, les instructions de code du programme d'ordinateur sont par exemple chargées dans la mémoire vive 143 avant d'être exécutées par le processeur de l'unité de traitement 141. L'unité de traitement 141 reçoit des signaux d'entrée 44, les traite et génère des signaux de sortie 45.

Les signaux d'entrée 144 comprennent diverses informations relatives au fonctionnement du système global (comprenant notamment la (ou les) unité(s) externe(s), le système de stockage tampon et de séquencement et le(s) poste(s) de préparation), notamment les identifiants de charge lus (par des dispositifs de lecture de type lecteur code à barre, lecteur d'étiquette RFID, etc.) sur les charges quand elles passent à différents endroits du système global (par exemple aux extrémités des différents convoyeurs).

Les signaux de sortie 145 comprennent diverses informations de contrôle pour le pilotage (contrôle) des équipements du système global (notamment au sein du système de stockage tampon et de séquencement), afin de gérer les mouvements des charges dans le système global.

Cette figure 14 illustre seulement une implémentation particulière parmi plusieurs possibles. En effet, l'unité de pilotage UP se réalise indifféremment sur une machine de calcul reprogrammable (un ordinateur PC, un processeur DSP ou un microcontrôleur) exécutant un programme comprenant une séquence d'instructions, et/ou sur une machine de calcul dédiée (par exemple un ensemble de portes logiques comme un FPGA ou un ASIC, ou tout autre module matériel). Dans le cas où l'unité de pilotage est implantée au moins en partie sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Système de stockage tampon et de séquencement de charges, configuré pour recevoir des charges non séquencées provenant d'au moins une unité externe (UE), via au moins un convoyeur aller d'entrée (CAE, CAE', CAE") compris dans ledit système, et fournir des charges séquencées à au moins un poste de préparation (PP, PP'), via au moins un convoyeur aller de sortie (CAS, CAS') compris dans ledit système, ledit système étant **caractérisé en ce qu'**il comprend :
- un élévateur alternatif (EA) comprenant une unique nacelle comportant K niveaux permettant chacun de transporter au moins une charge, avec K ≥ 2 ;
- au moins une unité de stockage tampon (UST1, UST2) comprenant une pluralité d'emplacements tampons, répartis sur une pluralité de niveaux et configurés chacun pour recevoir temporairement au moins une charge provenant de l'élévateur alternatif ; et
- une unité de pilotage (UP) configurée pour organiser :
* des premiers mouvements de charges depuis ledit au moins un convoyeur aller d'entrée (CAE, CAE', CAE") vers ladite au moins une unité de stockage tampon (UST1, UST2), via l'élévateur alternatif (EA) ; et
* des deuxièmes mouvements de charges depuis ladite au moins une unité de stockage tampon (UST1, UST2) vers ledit au moins un convoyeur aller de sortie (CAS, CAS'), via l'élévateur alternatif (EA), sous une contrainte de délivrance sur ledit au moins un convoyeur aller de sortie (CAS, CAS') d'au moins une séquence comprenant des charges dans un ordre voulu, ladite au moins une séquence dans un ordre voulu étant obtenue au moyen dudit élévateur alternatif,
**caractérisé en ce que** l'unité de pilotage (UP) est configurée pour organiser en outre des troisièmes mouvements de charges via l'élévateur alternatif (EA), pour des charges ayant été traitées par ledit au moins un poste de préparation (PP), depuis au moins un convoyeur retour d'entrée (CRE), compris dans ledit système, vers au moins une des entités appartenant au groupe comprenant :
- ladite au moins une unité de stockage tampon (UST1, UST2), pour des charges devant être à nouveau stockées ;
- ledit au moins un convoyeur aller de sortie (CAS, CAS'), pour des charges devant être à nouveau présentées audit au moins un poste de préparation (PP), sous ladite contrainte de délivrance ; et
- au moins un convoyeur retour de sortie (CRS, CRS', CRS") compris dans ledit système, pour des charges devant être renvoyées vers au moins une des entités appartenant au groupe comprenant ladite au moins une unité externe (UE), au moins un autre poste de préparation et au moins une autre unité externe,
**en ce que** le système comprend, entre l'élévateur alternatif (EA) et ledit au moins un convoyeur aller de sortie (CAS, CAS') :
- un dispositif de transfert de sortie (DTS) comprenant K niveaux permettant chacun de recevoir au moins une charge ; et
- un séquenceur de sortie (SeqS) pourvu de moyens de déplacement vertical ;
et **en ce que** l'unité de pilotage (UP) est configurée pour piloter :
- un transfert d'un groupe de N charges, depuis ladite au moins une unité de stockage tampon (UST1, UST2) vers l'élévateur alternatif (EA), avec N inférieur ou égal à une capacité de l'élévateur alternatif (EA) en nombre de charges ;
- un transfert, simultanément sur les K niveaux, de chaque groupe de N charges depuis l'élévateur alternatif vers le dispositif de transfert de sortie (DTS) ; et
- un transfert de chaque groupe de N charges, via le séquenceur de sortie (SeqS), depuis le dispositif de transfert de sortie vers ledit au moins un convoyeur aller de sortie (CAS, CAS'), sous ladite contrainte de délivrance.

2. Système selon la revendication 1, **caractérisé en ce qu'**une partie des premiers mouvements de charges est réalisée en même temps qu'une partie des deuxièmes mouvements de charges.

3. Système selon l'une quelconque des revendications 1 et 2, **caractérisé en ce qu'**une partie des deuxièmes mouvements de charges est réalisée en même temps qu'une partie des troisièmes mouvements de charges, et **en ce qu'**une partie des troisièmes mouvements de charges est réalisée en même temps qu'une partie des premiers mouvements de charges.

4. Système selon l'une quelconque des revendications 1 à 3, **caractérisé en ce que** chacun des K niveaux de la nacelle de l'élévateur alternatif (EA) comprend une rangée d'au moins deux emplacements de charge, et **en ce que** le système comprend au moins un couple comprenant un convoyeur aller de sortie (CAS, CAS') et un convoyeur retour d'entrée (CRE) qui sont parallèles et adjacents verticalement.

5. Système selon l'une quelconque des revendications 1 à 3, **caractérisé en ce que** chacun des K niveaux de la nacelle de l'élévateur alternatif (EA) comprend deux rangées d'au moins deux emplacements de charge, et **en ce que** le système comprend au moins un couple comprenant un convoyeur aller de sortie (CAS, CAS') et un convoyeur retour d'entrée (CRE) qui sont parallèles, adjacents horizontalement et présentent entre eux un écartement horizontal égal à un écartement horizontal entre deux rangées de chacun des K niveaux de la nacelle de l'élévateur alternatif (EA).

6. Système selon l'une quelconque des revendications 1 à 3, **caractérisé en ce que** chacun des K niveaux de la nacelle de l'élévateur alternatif (EA) comprend une rangée d'au moins deux emplacements de charge, et **en ce que** le système comprend au moins un couple comprenant un convoyeur aller d'entrée (CAE) et un convoyeur retour de sortie (CRS) qui sont parallèles et adjacents verticalement.

7. Système selon l'une quelconque des revendications 1 à 3, **caractérisé en ce que** chacun des K niveaux de la nacelle de l'élévateur alternatif (EA) comprend une rangée d'au moins deux emplacements de charge, et **en ce que** le système comprend au moins un couple comprenant un convoyeur aller d'entrée (CAE) et un convoyeur retour de sortie (CRS) qui sont positionnés à une même hauteur, de part et d'autre de l'élévateur alternatif (EA).

8. Système selon l'une quelconque des revendications 1 à 3, **caractérisé en ce que** chacun des K niveaux de la nacelle de l'élévateur alternatif (EA) comprend deux rangées d'au moins deux emplacements de charge, et **en ce que** le système comprend au moins un couple comprenant un convoyeur aller d'entrée (CAE, CAE', CAE") et un convoyeur retour de sortie (CRS, CRS', CRS") qui sont parallèles, adjacents horizontalement et présentent entre eux un écartement horizontal égal à un écartement horizontal entre deux rangées de chacun des K niveaux de la nacelle de l'élévateur alternatif (EA).

9. Système selon l'une quelconque des revendications 1 à 8, **caractérisé en ce qu'**il comprend deux unités de stockage tampon (UST1, UST2) disposées verticalement de part et d'autre de l'élévateur alternatif (EA) et comprenant chacune une pluralité de niveaux comprenant chacun au moins un emplacement tampon, chacun des K niveaux de la nacelle de l'élévateur alternatif (EA) pouvant venir en regard de chacun des niveaux de chacune des unités de stockage tampon (UST1, UST2) pour un transfert d'au moins une charge.

10. Système selon la revendication 1 à 9, **caractérisé en ce que** le dispositif de transfert de sortie (DTS) est pourvu de moyens de déplacement vertical et remplace le séquenceur de sortie, et **en ce que** l'unité de pilotage (UP) est configurée pour piloter un transfert de chaque groupe de N charges directement depuis le dispositif de transfert de sortie (DTS) vers ledit au moins un convoyeur aller de sortie (CAS, CAS').

11. Système selon l'une quelconque des revendications 1 à 10, **caractérisé en ce que** l'élévateur alternatif (EA) est multicharge à chaque niveau, et **en ce que** l'unité de pilotage (UP) est configurée pour piloter, pour chaque groupe de N charges, un séquencement des charges placées à chaque niveau de l'élévateur alternatif, ledit séquencement étant cohérent avec ladite contrainte de délivrance.

12. Système selon l'une quelconque des revendications 1 à 11, **caractérisé en ce qu'**il comprend, entre ledit au moins un convoyeur aller d'entrée (CAE, CAE', CAE") et l'élévateur alternatif (EA) :
- un dispositif de transfert d'entrée (DTE) comprenant K niveaux permettant chacun de recevoir au moins une charge ; et
- un séquenceur d'entrée (SeqE) pourvu de moyens de déplacement vertical ;
et **en ce que** l'unité de pilotage (UP) est configurée pour piloter :
- un transfert de charges, via le séquenceur d'entrée, depuis ledit au moins un convoyeur aller d'entrée (CAE, CAE', CAE") vers le dispositif de transfert d'entrée (DTE), en formant dans le dispositif de transfert d'entrée des groupes de N' charges réparties sur les K niveaux, avec N' inférieur ou égal à une capacité de l'élévateur alternatif en nombre de charges ;
- un transfert, simultanément sur les K niveaux, de chaque groupe de N' charges depuis le dispositif de transfert d'entrée (DTE) vers l'élévateur alternatif ; et
- un transfert de chaque groupe de N' charges, depuis l'élévateur alternatif vers ladite au moins une unité de stockage tampon (UST1, UST2), sous une contrainte de dépôt des N' charges.

13. Système selon la revendication 12, **caractérisé en ce que** le dispositif de transfert d'entrée (DTE) est pourvu de moyens de déplacement vertical et remplace le séquenceur d'entrée (SeqE), et **en ce que** l'unité de pilotage (UP) est configurée pour piloter un transfert de chaque groupe de N' charges directement depuis ledit au moins un convoyeur aller d'entrée (CAE, CAE', CAE") vers le dispositif de transfert d'entrée.

14. Système selon l'une quelconque des revendications 12 et 13, **caractérisé en ce que** l'élévateur alternatif (EA) est multicharge à chaque niveau, et **en ce que** l'unité de pilotage (UP) est configurée pour piloter, pour chaque groupe de N' charges, un séquencement par le séquenceur d'entrée des charges placées à chaque niveau du dispositif de transfert d'entrée (DTE), ledit séquencement étant cohérent avec ladite contrainte de dépôt des N charges.

## Patentansprüche

1. Pufferlager- und Sequenzierungssystem von Lasten, das konfiguriert ist, um nichtsequenzierte Lasten, die von mindestens einer externen Einheit (UE) stammen, über mindestens einen Eingangsvorlaufförderer (CAE, CAE', CAE"), der in dem System enthalten ist, zu empfangen und sequenzierte Lasten an mindestens eine Vorbereitungsstation (PP, PP') über mindestens einen Ausgangsvorlaufförderer (CAS, CAS'), der in dem System enthalten ist, bereitzustellen, wobei das System **dadurch gekennzeichnet ist, dass** es umfasst:
- einen alternierenden Heber (EA), umfassend eine einzige Gondel, die K Ebenen aufweist, die jeweils ermöglichen, mindestens eine Last zu transportieren, mit K ≥ 2;
- mindestens eine Pufferlagereinheit (UST1, UST2), umfassend mehrere Pufferplätze, die über eine Vielzahl von Ebenen verteilt sind und jeweils konfiguriert sind, um vorübergehend mindestens eine Last aufzunehmen, die von dem alternierenden Heber stammt; und
- eine Steuereinheit (UP), die konfiguriert ist, um:
* erste Bewegungen von Lasten von dem mindestens einen Eingangsvorlaufförderer (CAE, CAE', CAE") zu der mindestens einen Pufferlagereinheit (UST1, UST2) über den alternierenden Heber (EA) zu organisieren; und
* zweite Bewegungen von Lasten von der mindestens einen Pufferlagereinheit (UST1, UST2) zu dem mindestens einen Ausgangsvorlaufförderer (CAS, CAS') über den alternierenden Heber (EA) unter einer Ausgabeeinschränkung auf dem mindestens einen Ausgangsvorlaufförderer (CAS, CAS') von mindestens einer Sequenz, die Lasten in einer gewünschten Reihenfolge umfasst, zu organisieren, wobei die mindestens eine Sequenz in einer gewünschten Reihenfolge mittels des alternierenden Hebers erhalten wird,
**dadurch gekennzeichnet, dass** die Steuereinheit (UP) konfiguriert ist, um ferner dritte Bewegungen von Lasten über den alternierenden Heber (EA) für Lasten, die von der mindestens einen Vorbereitungsstation (PP) bearbeitet worden sind, von mindestens einem Eingangsrücklaufförderer (CRE), der in dem System enthalten ist, zu mindestens einer der Einheiten zu organisieren, die zu der Gruppe gehört, umfassend:
- die mindestens eine Pufferlagereinheit (UST1, UST2) für Lasten, die erneut gelagert werden müssen;
- den mindestens einen Ausgangsvorlaufförderer (CAS, CAS') für Lasten, die der mindestens einen Vorbereitungsstation (PP) unter der Ausgabeeinschränkung erneut vorgelegt werden müssen; und
- mindestens einen Ausgangsrücklaufförderer (CRS, CRS', CRS"), der in dem System enthalten ist, für Lasten, die zu mindestens einer der Einheiten zurückgeschickt werden müssen, die zu der Gruppe gehört, umfassend die mindestens eine externe Einheit (UE), mindestens eine andere Vorbereitungsstation und mindestens eine andere externe Einheit,
**dadurch gekennzeichnet, dass** das System zwischen dem alternierenden Heber (EA) und dem mindestens einen Ausgangsvorlaufförderer (CAS, CAS') umfasst:
- eine Ausgangsübertragungsvorrichtung (DTS), die K Ebenen aufweist, die jeweils ermöglichen, mindestens eine Last aufzunehmen; und
- einen Ausgangs-Sequenzierer (SeqS), der mit Vertikalbewegungsmitteln versehen ist;
und dadurch, dass die Steuereinheit (UP) konfiguriert ist, um
- eine Übertragung einer Gruppe von N Lasten von der mindestens einen Pufferlagereinheit (UST1, UST2) zu dem alternierenden Heber (EA) zu steuern, wobei N kleiner oder gleich einer Kapazität des alternierenden Hebers (EA) in Anzahl von Lasten ist;
- gleichzeitig auf den K Ebenen eine Übertragung von jeder Gruppe von N Lasten von dem alternierenden Heber zu der Ausgangsübertragungsvorrichtung (DTS) zu steuern; und
- eine Übertragung von jeder Gruppe von N Lasten über den Ausgangs-Sequenzierer (SeqS) von der Ausgangsübertragungsvorrichtung zu dem mindestens einen Ausgangsvorlaufförderer (CAS, CAS') unter der Ausgabeeinschränkung zu steuern.

2. System nach Anspruch 1, **dadurch gekennzeichnet, dass** ein Teil der ersten Bewegungen von Lasten gleichzeitig mit einem Teil der zweiten Bewegungen von Lasten durchgeführt wird.

3. System nach einem der Ansprüche 1 und 2, **dadurch gekennzeichnet, dass** ein Teil der zweiten Bewegungen von Lasten gleichzeitig mit einem Teil der dritten Bewegungen von Lasten durchgeführt wird und dadurch, dass ein Teil der dritten Bewegungen von Lasten gleichzeitig mit einem Teil der ersten Bewegungen von Lasten durchgeführt wird.

4. System nach einem der Ansprüche 1 bis 3, **dadurch gekennzeichnet, dass** jede der K Ebenen der Gondel des alternierenden Hebers (EA) eine Reihe von mindestens zwei Lastplätzen umfasst, und dadurch, dass das System mindestens ein Paar umfasst, das einen Ausgangsvorlaufförderer (CAS, CAS') und einen Eingangsrücklaufförderer (CRE) umfasst, die parallel und vertikal angrenzend sind.

5. System nach einem der Ansprüche 1 bis 3, **dadurch gekennzeichnet, dass** jede der K Ebenen der Gondel des alternierenden Hebers (EA) zwei Reihen von mindestens zwei Lastplätzen umfasst, und dadurch, dass das System mindestens ein Paar umfasst, das einen Ausgangsvorlaufförderer (CAS, CAS') und einen Eingangsrücklaufförderer (CRE) umfasst, die parallel, horizontal angrenzend sind und zwischen ihnen einen horizontalen Abstand aufweisen, der gleich einem horizontalen Abstand zwischen zwei Reihen jeder der K Ebenen der Gondel des alternierenden Hebers (EA) ist.

6. System nach einem der Ansprüche 1 bis 3, **dadurch gekennzeichnet, dass** jede der K Ebenen der Gondel des alternierenden Hebers (EA) eine Reihe von mindestens zwei Lastplätzen umfasst, und dadurch, dass das System mindestens ein Paar umfasst, das einen Eingangsvorlaufförderer (CAE) und einen Ausgangsrücklaufförderer (CRS) umfasst, die parallel und vertikal angrenzend sind.

7. System nach einem der Ansprüche 1 bis 3, **dadurch gekennzeichnet, dass** jede der K Ebenen der Gondel des alternierenden Hebers (EA) eine Reihe von mindestens zwei Lastplätzen umfasst, und dadurch, dass das System mindestens ein Paar umfasst, das einen Eingangsvorlaufförderer (CAE) und einen Ausgangsrücklaufförderer (CRS) umfasst, die auf gleicher Höhe auf beiden Seiten des alternierenden Hebers (EA) positioniert sind.

8. System nach einem der Ansprüche 1 bis 3, **dadurch gekennzeichnet, dass** jede der K Ebenen der Gondel des alternierenden Hebers (EA) zwei Reihen von mindestens zwei Lastplätzen umfasst, und dadurch, dass das System mindestens ein Paar umfasst, das einen Eingangsvorlaufförderer (CAE, CAE', CAE") und einen Ausgangsrücklaufförderer (CRS, CRS', CRS") umfasst, die parallel, horizontal angrenzend sind und zwischen ihnen einen horizontalen Abstand aufweisen, der gleich einem horizontalen Abstand zwischen zwei Reihen jeder der K Ebenen der Gondel des alternierenden Hebers (EA) ist.

9. System nach einem der Ansprüche 1 bis 8, **dadurch gekennzeichnet, dass** es zwei Pufferlagereinheiten (UST1, UST2) umfasst, die vertikal auf beiden Seiten des alternierenden Hebers (EA) angeordnet sind und jeweils mehrere Ebenen umfassen, die jeweils mindestens einen Pufferplatz umfassen, wobei jede der K Ebenen der Gondel des alternierenden Hebers (EA) gegenüber von jeder der Ebenen von jeder der Pufferlagereinheiten (UST1, UST2) für eine Übertragung von mindestens einer Last kommen kann.

10. System nach einem der Ansprüche 1 bis 9, **dadurch gekennzeichnet, dass** die Ausgangsübertragungsvorrichtung (DTS) mit Vertikalbewegungsmitteln versehen ist und den Ausgangs-Sequenzierer ersetzt und dadurch, dass die Steuereinheit (UP) konfiguriert ist, um eine Übertragung von jeder Gruppe von N Lasten direkt von der Ausgangsübertragungsvorrichtung (DTS) zu dem mindestens einen Ausgangsvorlaufförderer (CAS, CAS') zu steuern.

11. System nach einem der Ansprüche 1 bis 10, **dadurch gekennzeichnet, dass** der alternierende Heber (EA) auf jeder Ebene mehrfach belastbar ist und dass die Steuereinheit (UP) konfiguriert ist, um für jede Gruppe von N Lasten eine Sequenzierung der Lasten zu steuern, die auf jeder Ebene des alternierenden Hebers platziert sind, wobei die Sequenzierung mit der Ausgabeeinschränkung kohärent ist.

12. System nach einem der Ansprüche 1 bis **11, dadurch gekennzeichnet, dass** es zwischen dem mindestens einen Eingangsvorlaufförderer (CAE, CAE', CAE") und dem alternierenden Heber (EA):
- eine Eingangsübertragungsvorrichtung (DTE) umfasst, die K Ebenen umfasst, die jeweils ermöglichen, mindestens eine Last aufzunehmen; und
- einen Eingangs-Sequenzierer (SeqE) umfasst, der mit Vertikalbewegungsmitteln versehen ist;
und dadurch, dass die Steuereinheit (UP) konfiguriert ist, um:
- eine Übertragung von Lasten über den Eingangs-Sequenzierer von dem mindestens einen Eingangsvorlaufförderer (CAE, CAE', CAE") zu der Eingangsübertragungsvorrichtung (DTE) zu steuern, indem in der Eingangsübertragungsvorrichtung Gruppen von N' Lasten gebildet werden, die auf K Ebenen verteilt sind, wobei N' kleiner oder gleich einer Kapazität des alternierenden Hebers in Anzahl von Lasten ist;
- gleichzeitig auf den K Ebenen eine Übertragung von jeder Gruppe von N' Lasten von der der Eingangsübertragungsvorrichtung (DTE) zu dem alternierenden Heber zu steuern; und
- eine Übertragung von jeder Gruppe von N' Lasten von dem alternierenden Heber zu mindestens einer Pufferlagereinheit (UST1, UST2) unter einem Zwang der Ablagerung der N' Lasten zu steuern.

13. System nach Anspruch 12, **dadurch gekennzeichnet, dass** die Eingangsübertragungsvorrichtung (DTE) mit Vertikalbewegungsmitteln versehen ist und den Eingangs-Sequenzierer (SeqE) ersetzt und dadurch, dass die Steuereinheit (UP) konfiguriert ist, um eine Übertragung von jeder Gruppe von N' Lasten direkt von dem mindestens einen Eingangsvorlaufförderer (CAE, CAE', CAE") zu der Eingangsübertragungsvorrichtung zu steuern.

14. System nach einem der Ansprüche 12 und 13, **dadurch gekennzeichnet, dass** der alternierende Heber (EA) auf jeder Ebene mehrfach belastbar ist und dass die Steuereinheit (UP) konfiguriert ist, um für jede Gruppe von N' Lasten eine Sequenzierung durch den Eingangs-Sequenzierer der Lasten zu steuern, die auf jeder Ebene der Eingangsübertragungsvorrichtung (DTE) platziert sind, wobei die Sequenzierung mit dem Zwang der Ablagerung der N Lasten kohärent ist.

## Claims

1. System of buffer storage and sequencing of loads configured to receive non-sequenced loads coming from at least one external unit (UE) through at least one inbound forward conveyor (CAE, CAE', CAE") included in said system and to provide sequenced loads to at least one preparing station (PP, PP'), through at least one outbound forward conveyor (CAS, CAS') included in said system, said system being **characterized in that** it comprises:
- a reciprocating lift (EA) comprising a single nacelle comprising K levels each enabling the transportation of at least one load, with K ≥ 2;
- at least one buffer storage unit (UST1, UST2) comprising a plurality of buffer locations distributed over a plurality of levels and each configured to temporarily receive at least one load coming from the reciprocating lift; and
- a managing unit (UP) configured to organize:
* first movements of loads from said at least one inbound forward conveyor (CAE, CAE', CAE") to said at least one buffer storage unit (UST1, UST2), through the reciprocating lift (EA); and;
* second movements of loads from said at least one buffer storage unit (UST1, UST2) to said at least one outbound forward conveyor (CAS, CAS'), through the reciprocating lift (EA), under a constraint of delivery, on said at least one outbound forward conveyor (CAS, CAS'), of at least one sequence comprising loads in a given sequential order by means of said reciprocating lift,
**characterized in that** the managing unit (UP) is configured to furthermore organize third movements of loads through the reciprocating lift (EA), for loads that have been treated by said at least one preparing station (PP), from at least one inbound return conveyor (CRE), included in said system, towards at least one of the entities belonging to the group comprising:
- said at least one buffer storage unit (UST1, UST2) for loads that have to be stored again;
- said at least one outbound forward conveyor (CAS, CAS') for loads having to be again presented to said at least one preparing station (PP), under said constraint of delivery; and
- at least one outbound return conveyor (CRS, CRS', CRS") included in said system, for loads that have to be sent back to at least one of the entities belonging to the group comprising said at least one external unit (UE), at least one other preparing station and at least one other external unit,
and **in that** the system comprises, between the reciprocating lift (EA) and said at least one outbound forward conveyor (CAS, CAS'):
- an outbound transfer device (DTS) comprising K levels enabling each one to receive at least one load; and
- an outbound sequencer (SeqS) provided with vertical shifting means;
and **in that** the managing unit (UP) is configured to manage:
- a transfer of a group of N loads from at least one buffer storage unit (UST1, UST2) towards the reciprocating lift (EA) with N being smaller than or equal to a capacity of the reciprocating lift (EA) in number of loads;
- a transfer, simultaneously on all K levels, of each group of N loads from the reciprocating lift EA to the outbound transfer device (DTS); and
- a transfer of each group of N loads, through the outbound sequencer SeqS, from the outbound transfer device (DTS) to said at least one outbound forward conveyor (CAS) under delivery constraint.

2. System according to claim 1, **characterized in that** a part of the first movements of loads is carried out at the same time as a part of the second movements of loads.

3. System according to any one of the claims 1 and 2, **characterized in that** a part of the second movements of loads is carried out at same time as a part of a third movements of loads and **in that** a part of the third movements of loads is carried out at same time as a part of the first movements of loads.

4. System according to any one of the claims 1 to 3, **characterized in that** each of the K levels of the nacelle of the reciprocating lift (EA) comprises a row of at least two load locations, and **in that** the system comprises at least one pair comprising an outbound forward conveyor (CAS, CAS') and an inbound return conveyor (CRE) that are parallel and vertically adjacent.

5. System according to any one of the claims 1 to 3, **characterized in that** each of the K levels of the nacelle of the reciprocating lift (EA) comprises two rows of at least two load locations, and **in that** the system comprises at least one pair comprising an outbound forward conveyor (CAS, CAS') and an inbound return conveyor (CRE) that are parallel and vertically adjacent and have a horizontal distance between them equal to a horizontal distance between two rows of each of the K levels of the nacelle of the reciprocating lift (EA).

6. System according to any one of the claims 1 to 3, **characterized in that** each of the K levels of the nacelle of the reciprocating lift (EA) comprises a row of at least two load locations, and **in that** the system comprises at least one pair comprising an inbound forward conveyor (CAE) and an outbound return conveyor (CRS) that are parallel and vertically adjacent.

7. System according to any one of the claims 1 to 3, **characterized in that** each of the K levels of the nacelle of the reciprocating lift (EA) comprises a row of at least two load locations, and **in that** the system comprises at least one pair comprising an inbound forward conveyor (CAE) and an outbound return conveyor (CRS) that are positioned at a same height on either side of the reciprocating lift (EA).

8. System according to any one of the claims 1 to 3, **characterized in that** each of the K levels of the nacelle of the reciprocating lift (EA) comprises two rows of at least two load locations, and **in that** that the system comprises at least one pair comprising an inbound forward conveyor (CAE, CAE', CAE") and an outbound return conveyor (CRS, CRS', CRS") that are parallel, horizontally adjacent and have a horizontal distance between them equal to a horizontal distance between two rows of each of the K levels of the nacelle of the reciprocating lift (EA).

9. System according to any one of the claims 1 to 8, **characterized in that** it comprises two buffer storage units (UST1, UST2) disposed vertically on either side of the reciprocating lift (EA) and each comprising a plurality of levels each comprising at least one buffer location, each of the K levels of the nacelle of the reciprocating lift (EA) being able to come into a position facing each of the levels of each of the buffer storage units (UST1, UST2) for a transfer of at least one load.

10. System according to any one of the claims 1 to 9, **characterized in that** the outbound transfer device (DTS) is provided with vertical shifting means and replaces the output sequencer SeqS and **in that** the managing unit UP is configured to manage a transfer of each group of N loads directly from the outbound transfer device (DTS) to the outbound forward conveyor (CAS, CAS').

11. System according to any one of the claims 1 to 110, **characterized in that** the reciprocating lift (EA) is a multi-load lift at each level, and **in that** the managing unit (UP) is configured to manage, for each group of N loads, a sequencing of the loads placed at each level of the reciprocating lift, said sequencing being consistent with said delivery constraint.

12. System according to any one of the claims 1 to 11, **characterized in that** it comprises, between said at least one inbound forward conveyor (CAE, CAE', CAE") and the reciprocating lift (EA):
- an inbound transfer device (DTE) comprising K levels enabling each to receive at least one load; and
- an inbound sequencer (SeqE) provided with vertical shifting means;
and **in that** the managing unit (UP) is configured to manage:
- a transfer of loads, via the incoming sequencer, from said at least one incoming forward conveyor (CAE, CAE', CAE") towards the incoming transfer device (DTE), in forming, in the inbound transfer device, groups of N' loads distributed over the K levels, with N' smaller than or equal to a capacity of the reciprocating lift in number of loads;
- a transfer, simultaneously on the K levels, of each group of N' loads from the incoming transfer device (DTE) to the reciprocating lift; and
- a transfer of each group of N' loads, from the reciprocating lift to said at least one buffer storage unit (UST1, UST2), under a constraint of deposition of the N' loads.

13. System according to claim 12, **characterized in that** incoming transfer device (DTE) is provided with vertical shifting means and replaces the incoming sequencer (SeqE), and **in that** the managing unit (UP) is configured to manage a transfer of each group of N' loads directly from said at least one incoming forward conveyor (CAE, CAE', CAE") to the incoming transfer device.

14. System according to any one of the claims 12 and 13, **characterized in that characterized in that** the reciprocating lift (EA) is a multi-load lift at each level, and **in that** the managing unit (UP) is configured to manage, for each group of N loads,, a sequencing by the incoming sequencer of the loads placed at each level of the incoming transfer device, said sequencing being consistent with said constraint of deposition of the N loads.
